# EUROPEAN PATENT APPLICATION

(11) **EP 2 922 364 A1**
(43) Date of publication of application: **23.09.2015**
(21) Application number: 14305407.0
(22) Date of filing: 21.03.2014
(51) Int. Cl.: H04W 76/02

(54) **Dual Connectivity Network**

(71) Applicant: ALCATEL LUCENT, 92100 Boulogne-Billancourt (FR)
(72) Inventor: WORRALL, Chandrika, Swindon, Wiltshire SN5 7DJ (GB); PALAT, Sudeep, Swindon, Wiltshire SN5 7DJ (GB)
(74) Representative: Leppard, Andrew John

(57) **Abstract**

Abase station method, a base station, a user equipment method, user equipment and computer program products are disclosed. The base station method comprises: when it is determined that a user equipment has been configured for dual connectivity with the base station, maintaining configuration information for a radio resource control connection with a master base station also configured for dual connectivity with the user equipment for utilisation in response to a radio resource control connection re-establishment request from the user equipment. In this way, the base station is able to keep, retain or store the context configuration for the RRC connection with the base station so that the base station is prepared for the arrival of the user equipment triggered by an RRC connection re-establishment request from the user equipment, which may occur in a variety of different circumstances such as, for example, detecting a radio link failure.

## Description

### FIELD OF THE INVENTION

The present invention relates to a base station method, a base station, a user equipment method, a user equipment and computer program products.

### BACKGROUND

Wireless telecommunication systems are known. In such systems, mobile communication devices known as user equipment (for example, mobile telephones) are operable to communicate with base stations provided by network providers.

In known wireless telecommunication systems, radio coverage is provided to network connectable devices, such as mobile telephones, or wireless devices such as iPads or other similar tablets, within areas known as cells. Abase station is located in each cell to provide radio coverage. Typically, network connectable devices in each cell are operable to receive information and data from a base station and to transmit information and data to a base station.

User equipment roam through the wireless communications system. A number of base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Traditional base stations provide coverage in relatively large geographical areas and those cells are often referred to as macro cells. It is possible to provide a heterogeneous network (HetNet) where smaller sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity or user throughput within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator. In some cases, "dual connectivity" may be offered such that a user is configured to allow communication with two base stations such as, for example, a macro cell base station and a small cell base station. A number of dual connectivity implementations can be configured, each may offer different benefits.

Although dual connectivity deployments may offer advantages, unexpected consequences of such deployments may occur. It is desired to address those consequences.

### SUMMARY

According to a first aspect, there is provided a base station method, comprising: when it is determined that a user equipment has been configured for dual connectivity with the base station, maintaining configuration information for a radio resource control connection with a master base station also configured for dual connectivity with the user equipment for utilisation in response to a radio resource control connection re-establishment request from the user equipment.

The first aspect recognizes that one aspect of dual connectivity is that the user equipment is connected to two base stations (eNB), a master base station (MeNB) and secondary base station (SeNB) at a given time. A radio resource control (RRC) connection re-establishment procedure is triggered by the user equipment upon detecting a radio link failure, a handover failure, a mobility from the E-UTRA failure, an integrity check failure indication from lower protocol layers or an RRC connection reconfiguration failure. The RRC connection re-establishment procedure is used to reconfigure signalling radio bearer one (SRB1) and to resume data transfer only for this radio bearer and to reactivate AS security without changing algorithms. For the existing RRC connection re-establishment procedure to be successful, the base station to which the user equipment attempts to reconnect should have been prepared for the possible arrival of the user equipment (i.e. the user equipment context should be available at the base station to which the user equipment transmits a RRC connection re-establishment request message). According to the existing long-term evolution (LTE) approach, the neighbouring base station is prepared (given the user equipment context) for the user equipment arrival during a handover preparation phase only. This means that for the RRC connection re-establishment procedure to be successful, the RRC connection re-establishment request message should have been received either by the source base station or the target base station (which has been prepared for handover). However, the user equipment will attempt to re-establish to a base station other than the source base station in the case of connection failure due to user equipment mobility. Thus, in user equipment related RRC connection re-establishment, the target base station has to be prepared. The other triggers (the failure of re-establishment, such as radio link failure, integrity failure, etc.) would likely result in the source base station being selected for RRC connection re-establishment, where the source base station has the user equipment context in the existing deployment with single connectivity. However, when compared to the existing deployments, there it is a new RRC connection re-establishment scenario for dual connectivity configured user equipment. A typical deployment of dual connectivity is where the small cells are used for coverage holes in the macro cell coverage. In this scenario, the user equipment is configured with the macro and small cell configuration. In such a scenario, when the radio link failure happens in the macro cell coverage, it is highly unlikely that the connection towards the MeNB is good and the user equipment would select the SeNB for the RRC connection re-establishment. Even though the user equipment is dual connectivity configured towards the SeNB, the SeNB doesn't have the full user equipment context available and, hence, according to existing procedures, the RRC connection re-establishment request received by the SeNB will fail as there is no user equipment context available, which causes the user equipment to go idle. Hence, existing techniques do not support an RRC connection re-establishment towards the SeNB be other than in an MeNB to SeNB handover. Although existing techniques support a full configuration option for RRC connection re-establishment where the target does not have to use a delta configuration to the source configuration, this is not optimized and so results in data loss. Further, using existing techniques, even the full configuration option can only be used when the target base station has been prepared by the source base station.

Accordingly, a base station method may be provided. The method may comprise determining that a user equipment has been configured or has operated with dual connectivity with the base station. The method may also comprise the step of maintaining configuration information for an RRC connection with a master base station which is also configured for dual connectivity with the user equipment. That configuration information may then be used in response to an RRC Connection Re-establishment Request from the user equipment. In this way, the base station is able to keep, retain or store the context configuration for the RRC connection with the base station so that the base station is prepared for the arrival of the user equipment triggered by an RRC connection re-establishment request from the user equipment, which may occur in a variety of different circumstances such as, for example, detecting a radio link failure.

In one embodiment, the configuration information comprises user equipment context used by the master base station for the radio resource control connection. Accordingly, the base station may maintain, keep, retain or store the user equipment context used by the master base station.

In one embodiment, the configuration information comprises protocol layers configuration for the radio resource control connection between the user equipment and the master base station. Accordingly, the configuration of the different protocol layers of the RRC connection may be maintained by the base station for subsequent use.

In one embodiment, the protocol layers configuration comprise protocol layers other than at least one of a radio link control, a medium access control and a physical protocol layer. Accordingly, the configuration information may omit or exclude one or more of the radio link control, medium access control and physical protocol layers. This helps to reduce the amount and frequency of signalling between the base stations.

In one embodiment, the configuration information comprises at least of one S1 radio access bearer configuration, packet data convergence protocol configuration and security configuration. It will be appreciated that the S1 radio access bearer configuration is used when configuring the protocol layers.

In one embodiment, the maintaining comprises receiving the configuration information from the master base station when the base station is configured for dual connectivity with the user equipment. Accordingly, the configuration information may be received from the master base station upon the base station first being configured for dual connectivity.

In one embodiment, the maintaining comprises receiving changes in the configuration information from the master base station. Accordingly, changes in the configuration information may be received from the master base station. These changes may be applied to the configuration information stored in the base station in order to maintain the configuration information to match that within the master base station.

In one embodiment, the maintaining comprises requesting the configuration information from the master base station identified by a message received from the user equipment indicating that the user equipment is configured for dual connectivity with the base station and master base station. Accordingly, the base station may itself request the configuration information from the master base station. The base station may identify the master base station from an identity included in a message received from the user equipment.

In one embodiment, the message includes a cell radio network temporary identifier associated with the master base station. Accordingly, the base station may identify the master base station and may also identify that the user equipment is in dual connectivity using the cell radio network temporary identifier.

In one embodiment, the method comprises: in response to at least one of determining that the user equipment has been configured for dual connectivity with the base station as a master base station together with a secondary base station and receipt of a request for the configuration information from a secondary base station, transmitting the configuration information to the secondary base station. Accordingly, the base station may transmit configuration information when requested by another base station.

In one embodiment, the method comprises: in response to a change in the configuration information transmitted to the secondary base station, transmitting the change in the configuration information to the secondary base station. Accordingly, when a change to the transmitted configuration information occurs, an indication of that change may be transmitted to the receiving base station.

In one embodiment, the method comprises: transmitting an indication of the configuration information to the user equipment using a radio resource control connection re-establishment message.

According to a second aspect, there is provided a base station, comprising: maintaining logic operable, when it is determined that a user equipment has been configured for dual connectivity with the base station, to maintain configuration information for a radio resource control connection with a master base station also configured for dual connectivity with the user equipment for utilisation in response to a radio resource control connection re-establishment request from the user equipment.

In one embodiment, the configuration information comprises user equipment context used by the master base station for the radio resource control connection.

In one embodiment, the configuration information comprises protocol layers configuration for the radio resource control connection between the user equipment and the master base station.

In one embodiment, the protocol layers configuration comprise protocol layers other than at least one of a radio link control, a medium access control and a physical protocol layer.

In one embodiment, the configuration information comprises at least of one S1 radio access bearer configuration, packet data convergence protocol configuration and security configuration.

In one embodiment, the maintaining logic is operable to receive the configuration information from the master base station when the base station is configured for dual connectivity with the user equipment.

In one embodiment, the maintaining logic is operable to receive changes in the configuration information from the master base station.

In one embodiment, the maintaining logic is operable to request the configuration information from the master base station identified by a message received from the user equipment indicating that the user equipment is configured for dual connectivity with the base station and master base station.

In one embodiment, the message includes a cell radio network temporary identifier associated with the master base station.

In one embodiment, the base station comprises transmission logic operable, in response to at least one of determining that the user equipment has been configured for dual connectivity with the base station as a master base station together with a secondary base station and receipt of a request for the configuration information from a secondary base station, to transmit the configuration information to the secondary base station.

In one embodiment, the base station comprises transmission logic operable, in response to a change in the configuration information transmitted to the secondary base station, to transmit the change in the configuration information to the secondary base station.

In one embodiment, the base station comprises transmission logic operable to transmit an indication of the configuration information to the user equipment using a radio resource control connection re-establishment message.

According to a third aspect, there is provided a user equipment method, comprising: maintaining configuration information comprising each complete protocol layer configuration for a radio resource control connection with a base station; receiving an update to the configuration information and updating the configuration information; and updating a sub-set of all protocol layer entities in response to the configuration information being updated.

Accordingly, a user equipment method may be provided. The method may comprise the step of maintaining, retaining, keeping or storing configuration information providing each complete protocol layer configuration for a RRC connection with a base station. The method may also comprise the step of, when a complete update to each protocol layer configuration is received, updating the configuration of each complete protocol layer and updating a subset of the protocol layer entities in response to the update to the configuration information. In this way, even when a full configuration update occurs to the configuration information stored by the user equipment, only some of the corresponding protocol entities are updated in response.

In one embodiment, the sub-set comprises protocol layer entities other than a packet data convergence protocol entity.

In one embodiment, the step of updating comprises one of retaining and failing to reset the packet data convergence protocol entity.

In one embodiment, the method comprises the step of providing an indication that the user equipment has been configured for dual connectivity when it is determined a radio resource control connection re-establishment is required.

In one embodiment, the indication indicates identities of base stations supporting the dual connectivity.

In one embodiment, the indication comprises a cell radio network temporary identifier associated with a master base station.

According to a fourth aspect, there is provided user equipment, comprising: maintaining logic operable to maintain configuration information comprising each complete protocol layer configuration for a radio resource control connection with a base station; reception logic operable to receive an update to the configuration information and updating the configuration information; and updating logic operable to update a sub-set of all protocol layer entities in response to the configuration information being updated.

In one embodiment, the sub-set comprises protocol layer entities other than a packet data convergence protocol entity.

In one embodiment, the updating logic is operable to one of retain and fail to reset the packet data convergence protocol entity.

In one embodiment, the user equipment comprises providing logic operable to provide an indication that the user equipment has been configured for dual connectivity when it is determined a radio resource control connection re-establishment is required.

In one embodiment, the indication indicates identities of base stations supporting the dual connectivity.

In one embodiment, the indication comprises a cell radio network temporary identifier associated with a master base station.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the radio protocol architecture for dual connectivity;
Figure 2 illustrates a deployment scenario where the UE has selected eNB B to reconnect to upon an RRC connection re-establishment trigger;
Figure 3 illustrates an RRC connection re-establishment and resumption of DRB procedure involving the maintaining the SeNB;
Figure 4 illustrates an RRC connection re-establishment and resumption of DRB procedure involving the release of SeNB;
Figure 5 illustrates an RRC connection re-establishment and resumption of DRB procedure involving the retrieving of UE context prior to the connection re-establishment; and
Figure 6 illustrates an RRC connection re-establishment using a reconfiguration without delta while preserving PDCP to allow fast re-establishment and prevent data loss.

### DESCRIPTION OF THE EMBODIMENTS

Before discussing the embodiments in any more detail, first an overview will be provided. Embodiments prepare the secondary base station (SeNB) for possible user equipment arrivals where a radio resource control connection re-establishment procedure is initiated by the user equipment upon detecting a radio link failure, a handover failure, a mobility from Evolved Universal Terrestrial Radio Access (E-UTRA) failure, an integrity check failure indication from lower protocol layers or a radio resource control (RRC) connection reconfiguration failure. Three main approaches for the preparation of the SeNB for successful RRC connection re-establishment are envisaged.

In a first approach, the SeNB is prepared for the user equipment arrival at the time that dual connectivity is configured. That is to say that when a master base station (MeNB) and SeNB are configured to support dual connectivity in that both the MeNB and SeNB are configured to support the transmission of user plane data to the user equipment. In this arrangement, for example, configuration parameters for the MeNB are provided to and maintained by the SeNB. Whenever the configuration parameters at the MeNB change, an update is provided identifying the changes to the SeNB. A new message or a new parameter over the X2 interface is used to update the SeNB with the MeNB configuration.

In a second approach, the SeNB may not have been prepared for the user equipment's RRC connection re-establishment procedure. Accordingly, when the RRC connection re-establishment procedure occurs, the user equipment informs the base station that is attempting the RRC connection re-establishment procedure with that the user equipment was configured with dual connectivity and identifies the two base stations involved prior to the RRC connection re-establishment trigger occurring. Upon reception of the RRC connection re-establishment request from the user equipment, the base station which received that request identifies the dual connectivity configuration of the user equipment prior to the RRC connection re-establishment procedure being initiated. From this, the base station is able to identify whether it was configured as a SeNB prior to the RRC connection re-establishment procedure being triggered. If the base station was configured as a SeNB, the base station can then retrieve the user equipment context from the corresponding MeNB. The RRC connection re-establishment procedure including the base station retrieving the user equipment context from the MeNB is described in more detail below. Additionally, it is configured at the user equipment that if the user equipment has selected the SeNB for the RRC connection re-establishment procedure, the user equipment signals the MeNB information to the network together with the RRC connection re-establishment request message. Otherwise, the user equipment follows the existing legacy RRC connection re-establishment procedure.

In a third approach, an optimisation is provided to the provision of the full configuration information such that the base station can configure the user equipment without having up to date information regarding the previous configuration and without resetting the Packet Data Convergence Protocol (PDCP). This requires that the base station to which the user equipment connects is kept up to date with the S1 radio access bearer configurations, together with the PDCP and security configurations from, for example the MeNB, but does not require the lower layer protocol configurations to be transferred to it from the MeNB, these can be generated by that base station itself. The base station can then transmit the full configuration (as opposed to the delta) to the user equipment which includes the partial configuration provided by the MeNB, together with the remainder of the configuration generated by that base station. However, the user equipment, on receipt of this full configuration, does not reset/reconfigure all of the corresponding protocol entities which would be reset/reconfigured under existing procedures. Instead, typically, only the lower protocol layer entities are reset/reconfigured and, in particular, the PDCP entity remains unchanged. The benefit of this approach is less signalling over the X2 interface to keep the base station up to date with all of the configuration changes and it is possible to re-establish the bearers without losing data, provided that data forwarding over the network is considered.

### DUAL CONNECTIVITY

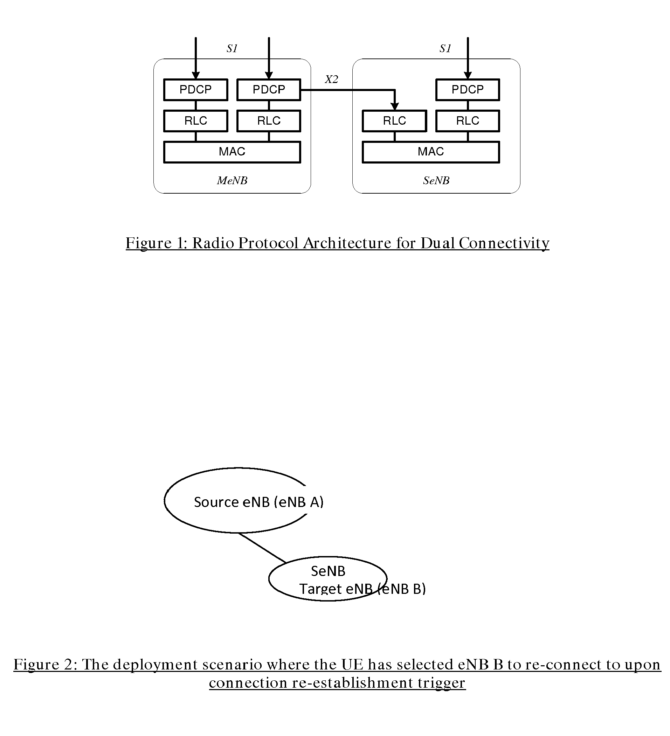

There are three possible data radio bearer types that can be configured for the user equipment when operating with dual connectivity, as illustrated in Figure 1. For MeNB cell group (MCG) bearers, the MeNB is U-plane connected to the serving gateway (S-GW) via S1-U, and the SeNB is not involved in the transport of user plane data. For split bearers, the MeNB is U-plane connected to the S-GW via S1-U and, in addition, the MeNB and the SeNB are interconnected via the X2-U interface. For SeNB cell group (SCG) bearers, the SeNB is directly connected with the S-GW via S1-U. Split bearers and SCG bearers have SeNB components in the configuration.

The user equipment may:
1. release the SeNB, SCG bearers and split bearers at the RRC connection re-establishment;
2. suspend SCG and split bearers and resume these bearers as per the network instruction after the completion of successful RRC connection reconfiguration;
3. release the lower layer configuration of the SeNB cells while preserving the PDCP or some of the core network related bearer information (for Architecture 1A)
4. release SeNB and split bearers and apply a default bearer configuration for the bearers (for Architecture 3C);
5. release SeNB and SCG bearers and signal the Evolved Universal Terrestrial Radio Access Network (E-UTRAN) with the SCG bearer information at RRC connection re-establishment.

Upon reception of the RRC connection re-establishment message from the user equipment, the network can take the following actions:
1. if the user equipment has connected to the source base station and the user equipment has not released all or part of the bearers, then the network may resume the old SeNB configuration and SCG/ split bearer configuration after the successful RRC connection re-establishment;
2. if the user equipment has connected to the source base station and the user equipment has released all or part of the bearers, then the E-UTRAN should release the SeNB and SCG/ split bearers configuration at the SeNB;
3. if the user equipment has connected to a different base station and the user equipment was configured with SeNB, then the network is required to release the SeNB configuration at the SeNB for the user equipment.

### RRC CONNECTION RE-ESTABLISHMENT PROCEDURE

Information exchanged during the existing RRC connection re-establishment procedure will now be described in more detail and, in particular, the information exchanged during neighbour cell preparation for RRC connection re-establishment. The re-establishment information element (IE) is used to communicate to the neighbouring cells for RRC connection re-establishment. The re-establishment information IE is shown below. The information contains the source physical cell identifier (ID), short MAC-I and security key information.

### Re-establishmentInfo

The *Re-establishmentInfo* IE contains information needed for the RRC connection re-establishment.

### Re-establishmentInfo information element

### -- ASN1START

```
 Re-establishmentInfo ::= SEQUENCE {
        sourcePhysCellId PhysCellId,
        targetCellShortMAC-I ShortMAC-I,
        additionalRe-estabInfoList AdditionalRe-estabInfoList OPTIONAL,
 }
 AdditionalRe-estabInfoList ::= SEQUENCE (SIZE (1..maxRe-estabInfo) ) OF
                                      AdditionalRe-estabInfo
 AdditionalRe-estabInfo ::= SEQUENCE{
        cellIdentity CellIdentity,
       key-eNodeB-Star Key-eNodeB-Star,
        shortMAC-I ShortMAC-I
 }
 Key-eNodeB-Star := BIT STRING (SIZE (256))
```

### -- ASN1STOP

| ***Re-establishment Info field descriptions*** |
|---|
| ***additional Re-estab Info List*** |
| Contains a list of shortMAC-I and KeNB* for cells under control of the target eNB, required for potential re-establishment by the UE in these cells to succeed. |
| ***Key -eNode B-Star*** |
| Parameter KeNB*: See TS 33.401 (32, 7.2.8.4). This parameter is only used for X2 handover, and for S1 handover, it shall be ignored by target eNB. |
| ***sourcePhy CellId*** |
| The physical cell identity of the source PCell, used to determine the UE context in the target eNB at re-establishment. |
| ***target Cell Short MAC-I*** |
| The ShortMAC-I for the handover target PCell, in order for potential re-establishment to succeed. |

In addition to the Re-establishmentInfo IE, AS-config can also be used to assist the neighbouring cell of the user equipment RRC connection re-establishment. However, this existing neighbouring cell preparation does not indicate whether the user equipment has been configured with dual connectivity or not. There are two main options for informing the base station to which the user equipment reconnects to of the user equipment's dual connectivity configuration prior to the RRC connection re-establishment procedure occurring.

In a first option, the neighbouring cells are informed of the user equipment's dual connectivity configuration using network interface signalling. This signalling may occur at the re-establishment preparation using the Re-establishmentInfo IE, the AS-config IE or a new IE provided over the X2 interface. The base station identifies the user equipment context from the Cell Radio Network Temporary Identifier (C-RNTI) provided by the user equipment.

In a second option, the user equipment informs the E-UTRAN of the dual connectivity configuration prior to the RRC connection re-establishment procedure trigger. Alternatively, when the user equipment does the RRC connection re-establishment, the base station knows that the user equipment is dual connected from the Cell Radio Network Temporary Identifier (C-RNTI) and requests more information from the MeNB (the SeNB needs to be aware of the C-RNTI of the user equipment in MeNB).

The first approach mentioned above is implemented by the first option. During the dual connectivity configuration, the MeNB provides the SeNB with the basic user equipment context information required to re-establish the connection in response to a RRC connection re-establishment request. The Re-establishmentInfo IE could be reused or a new message may be provided which includes the dual connectivity configuration information to prepare the SeNB for the user equipment arrival after the RRC connection re-establishment request trigger.

In the second approach mentioned above, the SeNB is not prepared with the user equipment context prior to the reception of the RRC connection re-establishment request from the user equipment. In this case, the user equipment informs the network of its dual connectivity configuration, or the SeNB is aware of the dual connectivity status of the user equipment based on the C-RNTI, and the SeNB can then retrieve the user equipment context from the corresponding MeNB.

In the third approach mentioned above, the SeNB is kept up to date with some of the configuration information, such as the configuration of the S1 bearers. The SeNB then reconfigures the user equipment without performing a delta configuration. That is to say that the SeNB provides a full configuration to the user equipment, but that only the entities corresponding to the appropriate protocol layers are reconfigured and reset. This has the benefit compared to the first approach mentioned above that the SeNB does not need to keep up to date with all of the MeNB configuration, thereby reducing the amount of signalling over the X2 interface and the risk of losing synchronisation of configuration in the MeNB and SeNB. This approach is also faster compared to the second approach to since there is no need for user equipment context to be fetched from the MeNB during the RRC connection re-establishment procedure. Also, the Packet Data Convergence Protocol (PDCP) entity is not reset as part of this procedure (in contrast to the current full configuration specified in the existing standards) and, hence, it makes it possible to perform the re-establishment without losing data. It will be appreciated that this approach need not be utilised only in the dual connectivity mode and can be used more generally where only some of the entities corresponding to the appropriate protocol layers are reconfigured and reset.

### NETWORK ACTION

It is assumed that the base station that the user equipment reconnects to has knowledge of the user equipment's dual connectivity configuration prior to the RRC connection re-establishment procedure trigger. Depending on whether the neighbouring cell supports the dual connectivity feature and, thus, would understand that the user equipment has been configured with dual connectivity prior to the RRC connection re-establishment procedure trigger, the network action and execution of the procedure will vary. There are two types of base stations to be considered in this context. The first is type A where the base station is aware of the dual connectivity support of the user equipment. The second is type B where the base station is not aware of the dual connectivity support of the user equipment.

For type Abase stations, upon reception of the RRC connection re-establishment request message from the user equipment, the network can take the following actions:
Action 1- if the user equipment has connected to the source base station and the user equipment has not released the bearers, the network may resume the old SeNB configuration and SCG/ split bearer configuration after a successful RRC connection re-establishment.
Action 2 - if the user equipment has connected to the source base station and the user equipment has released the bearers, then the E-UTRAN should release the SeNB and SCG/ split bearers' configuration at the SeNB.
Action 3 - if the user equipment has connected to a different base station and the user equipment was configured with the SeNB, then the network is required to release the SeNB configuration at the SeNB for the user equipment.
Action 4 - if the user equipment has connected to a base station which was configured as a SeNB prior to the RRC connection re-establishment procedure trigger, the base station retrieves the user equipment context from the MeNB (prior to the RRC connection re-establishment procedure trigger) and provides the user equipment with the RRC connection re-establishment message.

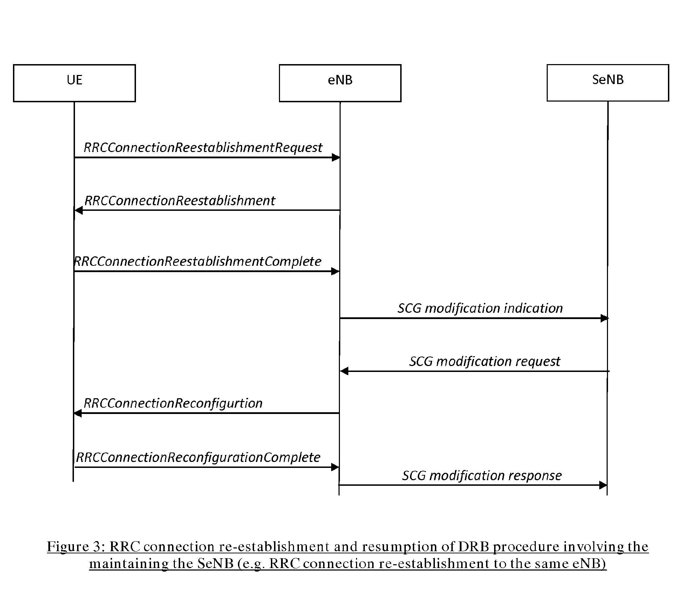

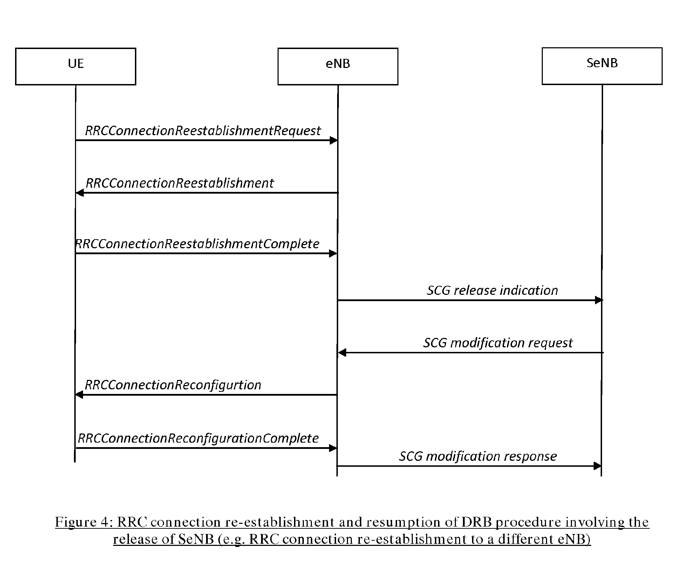

Actions 1 or 2 are performed if the user equipment has connected to the same source base station after the RRC connection re-establishment. The signalling flow for this is illustrated in Figures 3 and 4. The MeNB requests the SeNB to modify or release bearers upon reception of the RRC connection re-establishment request message.

Should the user equipment select a different base station for the RRC connection re-establishment then, in order for the re-establishment to be successful, that base station has to be prepared for the user equipment arrival. According to the existing standards, the neighbouring cell is prepared for user equipment arrival using a handover preparation procedure. The RRC connection re-establishment could be triggered too early, too late or as a result of radio link failure due to user equipment mobility.

For Action 3, the base station eNB B (illustrated in Figure 2) where the user equipment is reconnected does not have the control of the previously configured SeNB. As the base station eNB B has been prepared for the user equipment arrival, the network action to follow upon the reception of the RRC connection re-establishment request from the user equipment depends on the mobility scenario and the handover procedure itself.

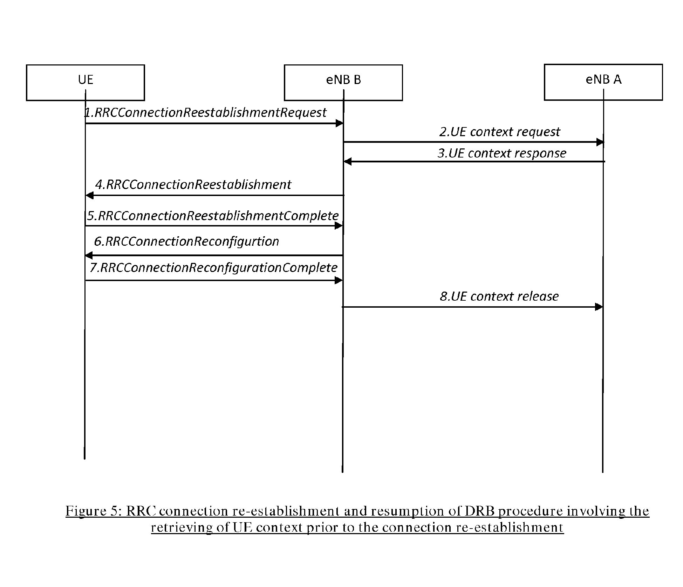

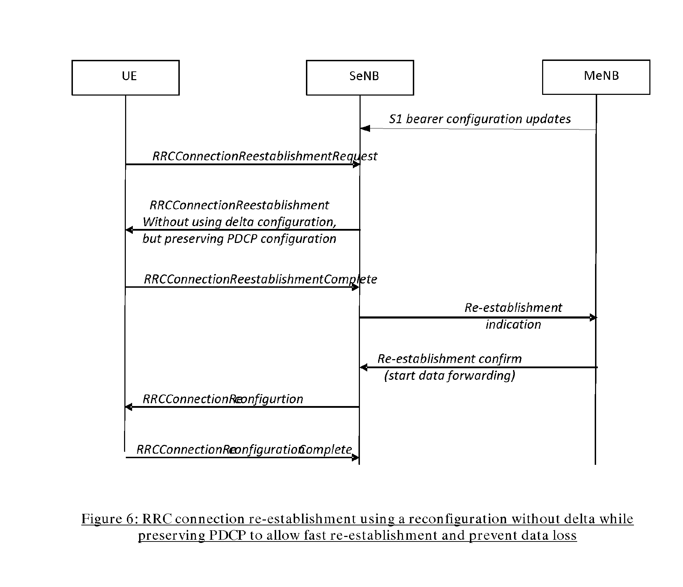

For Action 4, the base station eNB B which the user equipment reconnects to may or may not have the full user equipment context available. If the user equipment context is available, the base station eNB B signals the user equipment RRC connection re-establishment message. Otherwise, the base station eNB B retrieves the user equipment context from the base station eNB A prior to the transmission of the RRC connection re-establishment message to the user equipment, as shown in Figure 5. Upon completion of the RRC connection re-establishment procedure, the base station eNB B informs the base station eNB A that the user equipment has connected to base station eNB B by signalling the UE context release message - this message may be sent at any time after step 5. If the SeNB has sufficient user equipment context (for example S1 RAB context, security context, PDCP context), then the SeNB can proceed with the RRC connection re-establishment by doing a full configuration of the lower layers without resetting PDCP, thereby preventing data loss and allowing the faster reconfiguration, as shown in Figure 6.

Accordingly, it can be seen that embodiments provide a method and procedure for RRC connection re-establishment for dual connectivity configured user equipment. The method provides a mechanism for retrieving data bearers established to/from the SeNB during the re-establishment procedure.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station method, comprising:
when it is determined that a user equipment has been configured for dual connectivity with said base station, maintaining configuration information for a radio resource control connection with a master base station also configured for dual connectivity with said user equipment for utilisation in response to a radio resource control connection re-establishment request from said user equipment.

2. The method of claim 1, wherein said configuration information comprises user equipment context used by said master base station for said radio resource control connection.

3. The method of claim 1 or 2, wherein said configuration information comprises protocol layers configuration for said radio resource control connection between said user equipment and said master base station.

4. The method of claim 3, wherein said protocol layers configuration comprise protocol layers other than at least one of a radio link control, a medium access control and a physical protocol layer.

5. The method of any preceding claim, wherein said configuration information comprises at least one of S1 radio access bearer configuration, packet data convergence protocol configuration and security configuration.

6. The method of any preceding claim, wherein said maintaining comprises receiving said configuration information from said master base station when said base station is configured for dual connectivity with said user equipment.

7. The method of any preceding claim, wherein said maintaining comprises receiving changes in said configuration information from said master base station.

8. The method of any preceding claim, wherein said maintaining comprises requesting said configuration information from said master base station identified by a message received from said user equipment indicating that said user equipment is configured for dual connectivity with said base station and master base station.

9. The method of claim 8, wherein said message includes a cell radio network temporary identifier associated with said master base station.

10. The method of any preceding claim, comprising: in response to at least one of determining that said user equipment has been configured for dual connectivity with said base station as a master base station together with a secondary base station and receipt of a request for said configuration information from a secondary base station, transmitting said configuration information to said secondary base station.

11. The method of claim 10, comprising: in response to a change in said configuration information transmitted to said secondary base station, transmitting said change in said configuration information to said secondary base station.

12. Abase station, comprising:
maintaining logic operable, when it is determined that a user equipment has been configured for dual connectivity with said base station, to maintain configuration information for a radio resource control connection with a master base station also configured for dual connectivity with said user equipment for utilisation in response to a radio resource control connection re-establishment request from said user equipment.

13. A user equipment method, comprising:
maintaining configuration information comprising each complete protocol layer configuration for a radio resource control connection with a base station;
receiving an update to said configuration information and updating said configuration information; and
updating a sub-set of all protocol layer entities in response to said configuration information being updated.

14. User equipment, comprising:
maintaining logic operable to maintain configuration information comprising each complete protocol layer configuration for a radio resource control connection with a base station;
reception logic operable to receive an update to said configuration information and updating said configuration information; and
updating logic operable to update a sub-set of all protocol layer entities in response to said configuration information being updated.

15. A computer program product operable, when executed on a computer, to perform the method steps of any one of claims 1 to 11 or 13.
